# EUROPÄISCHE PATENTSCHRIFT

(11) **EP 2 198 186 B1**
(45) Veröffentlichungstag und Bekanntmachung des Hinweises auf die Patenterteilung: **23.02.2011**
(21) Anmeldenummer: 08803977.1
(22) Anmeldetag: 11.09.2008
(51) Int. Cl.: F16H 61/02, F16H 59/66, F16H 61/21

(54) **VERFAHREN ZUR STEUERUNG EINES AUTOMATISIERTEN STUFENSCHALTGETRIEBES**
METHOD FOR CONTROLLING AN AUTOMATIC MULTI-STEP SHIFT TRANSMISSION
PROCÉDÉ DE COMMANDE D'UNE BOÎTE DE VITESSES ÉTAGÉE AUTOMATISÉE

(30) Priorität: 18.09.2007 DE 102007044432
(43) Veröffentlichungstag der Anmeldung: 23.06.2010
(73) Patentinhaber: ZF Friedrichshafen AG, 88038 Friedrichshafen (DE)
(72) Erfinder: WINKEL, Matthias, 88250 Weingarten (DE)
(86) Internationale Anmeldenummer: PCT/EP2008/062010
(87) Internationale Veröffentlichungsnummer: WO 2009/037167

(56) Entgegenhaltungen:
- EP-A- 0 864 781
- DE-A1- 3 334 718
- DE-C2- 4 440 706
- US-A- 5 231 897
- US-A- 5 803 865

## Beschreibung

Die Erfindung betrifft ein Verfahren zur Steuerung eines automatisierten Stufenschaltgetriebes, das innerhalb eines Antriebsstrangs eines Kraftfahrzeugs, beispielsweise eines Nutzfahrzeugs, im Kraftfluss zwischen einem als Verbrennungsmotor ausgebildeten Antriebsmotor und einem Achsantrieb einer Antriebsachse oder einem Verteilergetriebe angeordnet ist, wobei die aktuelle Fahrbahnneigung ermittelt wird.

Bei einem Kraftfahrzeug, das mit einem automatisierten Stufenschaltgetriebe, wie einem automatisierten Schaltgetriebe, einem automatisierten Doppelkupplungsgetriebe oder einem Wandler-Automatgetriebe ausgerüstet ist, wird nach der Einfahrt in eine Gefällstrecke ein niedrigerer Gang eingelegt, um nach dem Übergang in den Schubbetrieb die Drehzahl des dann mit Schubabschaltung, also ohne Kraftstoffeinspritzung, betriebenen Antriebsmotors zu erhöhen. Durch die erhöhte Drehzahl des Antriebsmotors steigt das Schleppmoment und damit die Bremswirkung des Antriebsmotors an. Zudem wird die durch das Schleppmoment des Antriebsmotors an den Antriebsrädern bewirkte Bremskraft durch die höhere Übersetzung des niedrigeren Gangs zusätzlich erhöht.

Ist das Kraftfahrzeug, wie bei schweren Nutzfahrzeugen üblich, mit einer Dauerbremse, wie einem elektromagnetischen oder hydrodynamischen Retarder ausgerüstet, wird diese beim Befahren steiler und/oder längerer Gefällstrecken zusätzlich aktiviert, welches manuell durch den Fahrer oder auch automatisch durch ein elektronisches Steuerungsgerät erfolgen kann. Bei einer primärseitigen, also an der Eingangswelle des Stufenschaltgetriebes angeordneten Dauerbremse, vergrößert sich mit der erhöhten Drehzahl des Antriebsmotors sowohl deren Bremswirkung als auch deren durch die Kühlung begrenzte Bremskapazität. Bei einer sekundärseitigen, das heißt an der Ausgangswelle des Stufenschaltgetriebes angeordneten Dauerbremse erhöht sich mit der erhöhten Drehzahl des Antriebsmotors dagegen nur deren Bremskapazität, sofern die Kühlung der Dauerbremse mit der Kühlung des Antriebsmotors gekoppelt ist, was z.B. bei einem als Intarder bezeichneten Sekundärretarder der Fall ist, bei dem der Ölkreislauf mit dem des Stufenschaltgetriebes und der über einen Wärmetauscher mit dem Ölkreislauf in Verbindung stehende Kühlwasserkreislauf mit dem des Antriebsmotors gekoppelt ist. Eine entsprechende automatische Rückschaltung erfolgt in Abhängigkeit geeigneter Betriebsparameter, wie dem Fahrbahngefälle, der Fahrzeugmasse und einer Bremsanforderung des Fahrers.

Eine entsprechende Getriebesteuerung ist aus der DE 33 34 718 A1 bekannt. Diese Getriebesteuerung weist Einrichtungen zur Ermittlung der Fahrbahnneigung (Fahrbahnsteigung bzw. Fahrbahngefälle), der Fahrzeugmasse, des Motormomentes und eines für einen beschleunigungslosen Antrieb des Kraftfahrzeugs erforderlichen stationären Momentes auf. Mittels einer Gefällegangzuordnung wird jedem Fahrbahngefälle ein optimal passender Gang zugeordnet, mit dem das Gefälle ohne eine zusätzliche Betätigung der Betriebsbremse mit konstanter Fahrgeschwindigkeit befahren werden kann, wobei die Benutzung einer gegebenenfalls vorhandenen Dauerbremse berücksichtigt wird. Eine Schaltung in den optimalen Gang wird entweder dem Fahrer empfohlen, z.B. mittels einer entsprechenden Sollganganzeige, oder automatisch ausgelöst. Eine Schaltung in den optimalen Gang wird dann gesperrt, wenn der Fahrer beim Befahren eines Gefälles das Fahrpedal betätigt oder das Gefälle gerade deutlich kleiner wird.

Außerdem ist in der US 5,231,897 eine entsprechende Steuerungseinrichtung eines Automatgetriebes beschrieben, bei der aus der Fahrzeugbeschleunigung und dem Drehmoment des Antriebsmotors der aktuelle Fahrwiderstand berechnet wird. Wenn der aktuelle Fahrwiderstand einen oberen ersten Grenzwert überschreitet, wird daraus eine Bergauffahrt erkannt und eine Hochschaltung verhindert. Wenn der aktuelle Fahrwiderstand einen unteren zweiten Grenzwert unterschreitet, wird daraus eine Bergabfahrt erkannt und zur Erzielung einer Bremswirkung des Antriebsmotors eine Rückschaltung ausgelöst.

Die EP 0 864 781 A1 offenbart ein Verfahren zum Steuern einer Drehzahländerung eines Fahrzeug-Automatikgetriebes, wobei ein Drehzahländerungsschritt bei einem Gefälle auf der Basis einer Neigung einer Straßenfläche bestimmt wird, auf der das Fahrzeug fährt. Die Fahrzeugbeschleunigung wird mit einer Bezugsbeschleunigung verglichen, die einem Fahrzeug-Fahrzustand entspricht. Eine Hochschaltaufforderung wird auf Basis der Ergebnisse des Vergleichs selektiv aufgehoben, wobei die Bezugsbeschleunigung auf der Basis der Neigung, die als ein Fahrzeug-Fahrzustand dient, eingestellt wird. Die Bezugsbeschleunigung wird nach diesem Verfahren so eingestellt, dass die Hochschaltaufforderung umso schneller aufgehoben wird, je steiler ein Gefälle ist.

In der DE 44 40 706 C2, die alle Merkmale des Oberbegriffs des Anspruchs 1 offenbart, wird ein Verfahren zur Steuerung eines Automatgetriebes vorgeschlagen, nach dem aus der erfassten Fahrbahnneigung und dem ermittelten Strecken profil ein effektiver Bergfaktor bestimmt wird, der als Interpolationsfaktor verwendet wird. Bei einer erkannten Bergauffahrt werden die aktuell verwendeten Schaltkennlinien jeweils durch eine Interpolation zwischen einer Schaltkennlinie für eine Fahrt in der Ebene und einer Schaltkennlinie für eine Fahrt bei extremer Fahrbahnsteigung ermittelt. Bei einer erkannten Bergabfahrt werden die aktuell verwendeten Schaltkennlinien jeweils durch eine Interpolation zwischen einer Schaltkennlinie für eine Fahrt in der Ebene und einer Schaltkennlinie für eine Fahrt bei extremem Fahrbahngefälle ermittelt.

Eine Hochschaltung erfolgt beim Stand der Technik erst nach der Einfahrt in eine Ebene oder nach dem Übergang in den Zugbetrieb, also wenn der Fahrer das Fahrpedal betätigt oder eine eingeschaltete Geschwindigkeitsregelanlage die Kraftstoffeinspritzung des Antriebsmotors automatisch eingeschaltet hat. Ausnahmsweise kann eine Hochschaltung bei aktivierter Schubabschaltung des Antriebsmotors beim Befahren einer Gefällstrecke auch automatisch als Schutzschaltung ausgelöst werden, wenn die Drehzahl des Antriebsmotors, z.B. aufgrund einer Einfahrt in eine sehr steile Gefällstrecke oder wegen einer hohen Fahrzeugmasse, eine kritische obere Drehzahlgrenze er reicht oder überschritten hat. Nachteilig an einer erst nach der Einfahrt in eine Ebene oder nach dem Übergang in den Zugbetrieb erfolgenden Hochschaltung ist, dass der Schwung des Kraftfahrzeugs, also die auf das Kraftfahrzeug wirksame Hangabtriebskraft, im Gefälleauslauf nur unzureichend genutzt wird, um das Kraftfahrzeug im Gefälleauslauf und zu Beginn der daran anschließenden Ebene oder einem neuen Anstieg anzutreiben. Dadurch wird der Schubbetrieb relativ früh beendet und die Kraftstoffeinspritzung wieder eingeschaltet, was einen unnötig hohen Kraftstoffverbrauch bewirkt. Zudem ist die Lärmentwicklung des Antriebsmotors im Gefälleauslauf aufgrund der durch den niedrigeren Gang bedingten hohen Motordrehzahl nachteilig hoch.

Der vorliegenden Erfindung liegt daher die Aufgabe zugrunde, ein Verfahren zur Steuerung eines automatisierten Stufenschaltgetriebes der eingangs genannten Art anzugeben, mit dem das Schaltverhalten des Stufenschaltgetriebes im Gefälleauslauf im Hinblick auf einen geringeren Kraftstoffverbrauch und niedrigere Lärmemissionen verbessert werden kann.

Die Lösung dieser Aufgabe ergibt sich aus den Merkmalen des Hauptanspruchs, während vorteilhafte Weiterbildungen den Unteransprüchen entnehmbar sind.

Gemäß den Merkmalen des Hauptanspruchs geht die Erfindung aus von einem Verfahren zur Steuerung eines automatisierten Stufenschaltgetriebes, wie ein automatisiertes Schaltgetriebe, ein automatisiertes Doppelkupplungsgetriebe oder ein Wandler-Automatgetriebe, das innerhalb eines Antriebsstrangs eines Kraftfahrzeugs im Kraftfluss zwischen einem als Verbrennungsmotor ausgebildeten Antriebsmotor und einem Achsantrieb einer Antriebsachse oder einem Verteilergetriebe angeordnet ist, wobei die aktuelle Fahrbahnneigung (Fahrbahnsteigung bzw. Fahrbahngefälle) ermittelt wird. Außerdem ist vorgesehen, dass spätestens nach der Einfahrt in die Gefällstrecke und/oder nach dem Übergang in den Schubbetrieb eine Erkennungsfunktion zur Ermittlung eines Gefälleauslaufs gestartet wird, und dass bei einem erkannten Gefälleauslauf schon vor der Einfahrt in die Ebene und/oder vor dem Übergang in den Zugbetrieb im Schubbetrieb in einen höheren Gang geschaltet, also eine Schubhochschaltung durchgeführt wird.

Es wird somit noch während der Bergabfahrt eine Schubhochschaltung durchgeführt. Hierdurch wird die Drehzahl des Antriebsmotors und eines gegebenenfalls vorhandenen Primärretarders um den Übersetzungssprung zwischen dem zuvor eingelegten niedrigeren Gang und dem aktuell eingelegten höheren Gang abgesenkt. Dies führt, neben einer Absenkung der Lärmemissionen des Antriebsmotors und des Stufenschaltgetriebes, zu einer Reduzierung des Schleppmomentes des Antriebsmotors und des Bremsmomentes des Primärretarders. Demzufolge wird das Kraftfahrzeug beim Durchfahren des Gefälleauslaufs aufgrund der insgesamt geringeren Bremskräfte im Schubbetrieb zumindest geringfügig beschleunigt, so dass der Übergang in den Zugbetrieb beim anschließenden Befahren der Ebene im Vergleich zu bisherigen Steuerungsverfahren deutlich später erfolgt. Daraus können sich, besonders wenn das Streckenprofil der befahrenen Fahrstrecke häufige Wechsel zwischen bergigen und ebenen Abschnitten aufweist, deutliche Kraftstoffeinsparungen ergeben. Zudem wird der Fahrer durch eine derartige, automatisch ausgelöste Hochschaltung von der Wahl des optimalen Gangs entlastet und kann sich besser auf die Beobachtung des Verkehrsgeschehens konzentrieren.

Die Erkennungsfunktion zur Ermittlung eines Gefälleauslaufs ist bevorzugt derart ausgebildet, dass innerhalb der Erkennungsfunktion in einem festgelegten Zeittakt (tᵢ, tᵢ₊₁, tᵢ₊₂, ...) die Fahrbahnneigung α_{FB/i} in Fahrtrichtung, also das Fahrbahngefälle bzw. die Fahrbahnsteigung, ermittelt wird, und dass ein Gefälleauslauf dann als erkannt gilt, wenn in einer vorgegebenen Anzahl aufeinander folgender unmittelbar vorhergehender Zeittakte (tₙ₋₃, tₙ₋₂, tₙ₋₁, tₙ) das ermittelte Fahrbahngefälle α_{FB/i} im Betrag streng monoton fallend war (|α_{FB/i}| < |α_{FB/i-1}|), und wenn das in dem aktuellen Zeittakt tₙ ermittelte aktuelle Fahrbahngefälle α_{FB/n} im Betrag kleiner als ein vorab festgelegter unterer Gefällegrenzwert (α_{Gr/u} ist (|(α_{FB/n}| < |α_{Gr/u}|). Die für eine zuverlässige Ermittlung eines Gefälleauslaufs erforderliche Anzahl von Zeittakten (tₙ₋₃, tₙ₋₂, tₙ₋₁, tₙ) wird im Wesentlichen von der Länge der Zeittakte sowie von dem Streckenprofil bestimmt und kann gegebenenfalls variabel gestaltet, also bedarfsweise erhöht oder verringert werden.

Der höhere Gang, in den durch die automatisch ausgelöste Schubschaltung geschaltet wird, wird zweckmäßig in Abhängigkeit von dem aktuellen Fahrwiderstand F_{w} derart bestimmt, dass die in diesem Gang zu erwartende Fahrbeschleunigung a_{F/erw} einen vorab festgelegten Beschleunigungsgrenzwert a_{Gr} nicht überschreitet (a_{F/erw} ≤ a_{Gr}). Hierdurch wird sichergestellt, dass das Kraftfahrzeug in dem höheren Gang nicht in einem für den Fahrer überraschend und möglicherweise gefährlich hohen Umfang beschleunigt, sondern in einer notfalls durch eine Bremsbetätigung sicher kontrollierbaren Weise beschleunigt.

Da die Ermittlung eines Gefälleauslaufs vergleichsweise schwierig und mit einer gewissen Unsicherheit verbunden ist, ist es aus Sicherheitsgründen sinnvoll, dass die Schubhochschaltung auch bei einem erkannten Gefälleauslauf dann gesperrt wird, wenn innerhalb eines definierten und unmittelbar zurückliegenden Zeitraum Δt die Betätigung mindestens eines sicherheitsrelevanten Fahrsteuerungselementes detektiert und/oder ein vorab festgelegter Grenzwert mindestens eines sicherheitsrelevanten Betriebsparameters überschritten wurde.

Demzufolge wird die Schubhochschaltung zweckmäßig dann gesperrt, wenn innerhalb des betrachteten Zeitraumes Δt eine Betätigung der Betriebsbremse detektiert wurde, was z.B. mittels eines Bremspedalsensors anhand einer Bremspedalauslenkung x_{BP} > 0 und/oder mittels eines Bremsdrucksensors der Betriebsbremse anhand eines Bremsdruckes p_{Br} > 0 ermittelbar ist. Durch eine Betätigung der Betriebsbremse will der Fahrer das Kraftfahrzeug, z.B. aufgrund entsprechender Ereignisse des beobachteten Verkehrsgeschehens, verzögern, so dass diesem Fahrerwunsch eine durch die an sich vorgesehene Schubhochschaltung bedingte Beschleunigung entgegen wirken würde, und zum Ausgleich der geringeren Bremswirkung des Antriebsmotors eine um so stärkere Betätigung der Betriebsbremse erforderlich wäre.

Ebenso wird die Schubhochschaltung zweckmäßig dann gesperrt, wenn innerhalb des betrachteten Zeitraumes Δt eine positive Beschleunigung a_{F} des Kraftfahrzeugs detektiert wurde (a_{F} > 0) oder wenn die Beschleunigung a_{F} größer als ein vorgegebener Grenzwert a_{grenz} ist (a_{F} > a_{grenz}). Liegt eine positive Fahrbeschleunigung a_{F} > 0 schon vor einer Schubrückschaltung vor, so ist eine bevorstehende manuelle oder automatische Betätigung der Betriebsbremse (durch den Fahrer oder durch eine eingeschaltete Geschwindigkeitsregelanlage) wahrscheinlich, so dass die Durchführung der automatischen Schubhochschaltung in dieser Situation eher als nachteilig anzusehen ist.

Des Weiteren wird es als sinnvoll angesehen, dass die Schubhochschaltung dann gesperrt wird, wenn innerhalb des betrachteten Zeitraumes Δt das ermittelte Fahrbahngefälle α_{FB} einen oberen Gefällegrenzwert α_{Gr/o} überschritten hat. Da das Fahrbahngefälle im Gegensatz zu einer Fahrbahnsteigung im Allgemeinen als negative Fahrbahnneigung α_{FB} < 0 definiert ist, müssen in der Relation die Beträge betrachtet werden, weshalb die Bedingung korrekt lautet: |α_{FB}| > |α_{Gr/o}|. Liegt demnach ein Streckenprofil mit steileren Gefällstrecken vor, so wird zweckmäßig die Schubhochschaltung auch bei erkanntem Gefälleauslauf aus Sicherheitsgründen unterdrückt, um bei einer gegebenenfalls an den erkannten Gefälleauslauf oder an einen nachfolgenden ebenen Streckenabschnitt anschließenden weiteren Gefällstrecke eine sofortige Schubhochschaltung zu vermeiden.

Aus diesem Grund wird die Schubhochschaltung zweckmäßig auch dann gesperrt, wenn die ermittelte Fahrzeugmasse m_{Fzg} einen oberen Massegrenzwert m_{Gr/o} überschritten hat (M_{Fzg} > m_{Gr/o}), da eine hohe Fahrzeugmasse m_{Fzg} auch bei relativ geringem Fahrbahngefälle α_{FB} < 0 einer gegebenenfalls an den erkannten Gefälleauslauf anschließenden Gefällstrecke in dem höheren Gang zu einer hohen Fahrbeschleunigung a_{F} führen würde, die als Reaktion eine sofortige Rückschaltung erfordern würde.

Die beiden vorgenannten Betriebsbedingungen zur Unterdrückung der Schubhochschaltung können auch kombiniert werden, indem die Schubhochschaltung dann gesperrt wird, wenn der ermittelte Fahrwiderstand F_{W} in dem betrachteten Zeitraum Δt einen unteren (negativen) Widerstandsgrenzwert F_{Gr/u} unterschritten hat (F_{W} < F_{Gr/u}). Ein hohes Fahrbahngefälle α_{FB} < 0 und eine hohe Fahrzeugmasse, m_{Fzg} führen bekanntlich zu einer hohen Hangabtriebskraft und somit zu einem kleinen, also negativen und das Kraftfahrzeug antreibenden Fahrwiderstand F_{W} < 0, bei dem die an sich vorgesehene Schubhochschaltung aus den vorgenannten Gründen zweckmäßig unterdrückt wird.

Ist eine Dauerbremse aktiviert, wie ein an der Eingangswelle des Stufenschaltgetriebes angekoppelter Primärretarder oder ein an der Ausgangswelle des Stufenschaltgetriebes angekoppelter Sekundärretarder, so ist die Unterdrückung der Schubhochschaltung auch in Abhängigkeit von der aktuellen Kapazitätsauslastung der Dauerbremse sinnvoll. Demzufolge wird die Schubhochschaltung dann gesperrt, wenn bei aktivierter Dauerbremse das aktuelle Bremsmoment M_{DBr} der Dauerbremse eine auf die maximale Bremskapazität M_{DB}_ₘₐₓ der Dauerbremse bezogene Obergrenze (z.B. 80% der maximalen Bremskapazität; Faktor = 0,8) überschritten hat (M_{DBr} > 0,8 * M_{DBr}_ₘₐₓ), also die Dauerbremse nahe ihrer Belastungsgrenze betrieben wird. Hierdurch wird erreicht, dass die drehzahlabhängige Bremskapazität M_{DBr}_ₘₐₓ der Dauerbremse durch die Schubrückschaltung nicht reduziert wird, und dass in einer gegebenenfalls an den erkannten Gefälleauslauf anschließenden Gefällstrecke eine ausreichend hohe Kapazitätsreserve der Dauerbremse für eine bedarfsweise erforderliche stärkere Verzögerung des Kraftfahrzeugs zur Verfügung steht.

Aus einem weiteren sicherheitsrelevanten Grund kann die Schubhochschaltung trotz erkanntem Gefälleauslauf auch dann gesperrt werden, wenn bei aktivierter Geschwindigkeitsregelanlage die Fahrgeschwindigkeit v_{F} innerhalb des betrachteten Zeitraumes Δt die aktuelle Sollgeschwindigkeit v_{F_soll} der Geschwindigkeitsregelanlage überschritten hat (v_{F} > v_{F_soll}). In diesem Fall liegt keine stationäre Bergabfahrt vor, sondern die Geschwindigkeitsregelanlage regelt, z.B. durch eine entsprechende Ansteuerung des Retarders, die Sollgeschwindigkeit v_{F_Soll} ein, was auf ein zumindest abschnittsweise zunehmendes Fahrbahngefälle α_{FB} < 0 hindeutet. Demzufolge wird die an sich vorgesehene Schubhochschaltung in diesem Fall aus Sicherheitsgründen unterdrückt.

Als weiteres Kriterium zur Unterdrückung der Schubhochschaltung kann eine Betriebssituation angesehen werden, in der sich das betreffende Kraftfahrzeug einem vorausfahrenden Kraftfahrzeug nähert. Wird dann von einer aktivierten Abstandsregelung (ACC = adaptive cruise control) erkannt, dass innerhalb des betrachteten Zeitraumes Δt die ermittelte Fahrgeschwindigkeit v_{F/a} des vorausfahrenden Kraftfahrzeugs die eigene Fahrgeschwindigkeit v_{F} unterschritten hat (v_{F/a} < v_{F}), so wird die geplante Schubhochschaltung zweckmäßig nicht durchgeführt, um eine zu schnelle und möglicherweise gefährliche Annäherung an das vorausfahrende Kraftfahrzeug zu vermeiden.

Zur Verdeutlichung der Erfindung ist der Beschreibung eine Zeichnung beigefügt. In dieser zeigt die einzige Figur eine schematische Darstellung der erfindungsgemäßen Ermittlung eines Gefälleauslaufs.

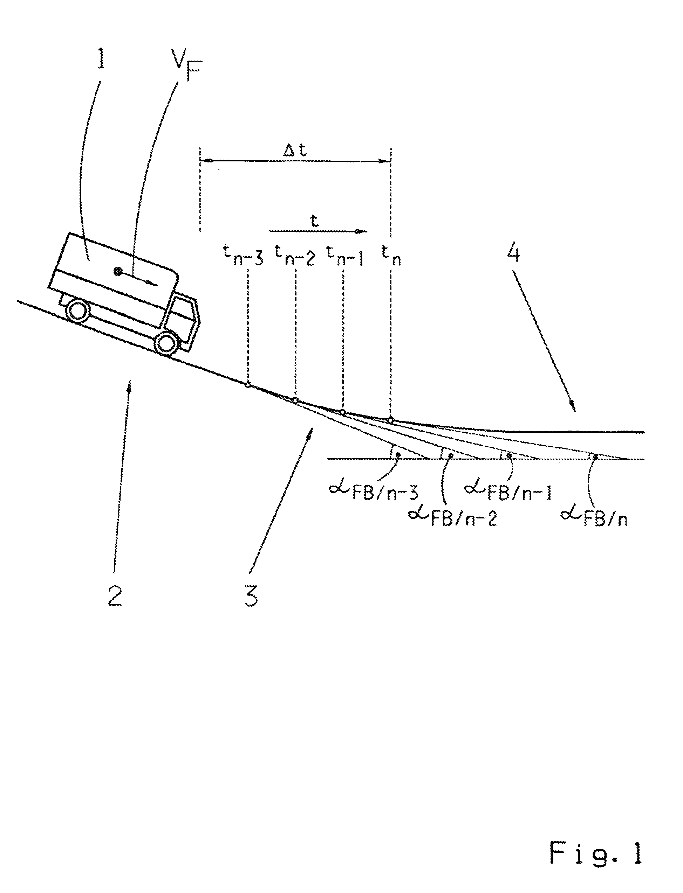

In der schematischen Darstellung der Fig. 1 befährt ein Kraftfahrzeug 1 eine Gefällstrecke 2 mit der Fahrgeschwindigkeit v_{F}, wobei sich der Antriebsmotor im Schubbetrieb befindet und ein gegebenenfalls vorhandener Retarder eingeschaltet ist. Spätestens nach der Einfahrt in die Gefällstrecke 2 und/oder nach dem Übergang in den Schubbetrieb ist eine Erkennungsfunktion zur Ermittlung eines zwischen der aktuellen Gefällstrecke 2 und einer anschließenden Ebene 4 liegenden Gefälleauslaufs 3 in einem elektronischen Steuerungsgerät gestartet.

Innerhalb der Erkennungsfunktion wird in einem festgelegten Zeittakt tᵢ, tᵢ₊₁, tᵢ₊₂,... die jeweils aktuelle Fahrbahnneigung α_{FB/i}, α_{FB/i+1}, α_{FB/i+2}, ... , also das Fahrbahngefälle bzw. die Fahrbahnsteigung ermittelt. Wenn dann in einer vorgegebenen Anzahl aufeinander folgender und unmittelbar vorhergehender Zeittakte, hier beispielsweise von vier Zeittakten tₙ₋₃, tₙ₋₂, tₙ₋₁, tₙ das ermittelte Fahrbahngefälle α_{FB/i} im Betrag monoton fallend war, also |α_{FB/n}| < |α_{FB/n-1}| < |α_{FB/n-2}| < |α_{FB/n-3}| gilt, und zusätzlich das in dem aktuellen Zeittakt tₙ ermittelte aktuelle Fahrbahngefälle α_{FB/n} im Betrag kleiner als ein vorab festgelegter unterer Gefällegrenzwert α_{Gr/u} ist, also |α_{FB/n}| < |α_{Gr/u}| gilt, so gilt der Gefälleauslauf 3 als erkannt.

In diesem Fall wird normalerweise schon vor der Einfahrt in die Ebene 4 und/oder vor dem Übergang in den Zugbetrieb im Schubbetrieb in einen höheren Getriebegang geschaltet, also eine Schubhochschaltung durchgeführt. Hierdurch wird die Drehzahl des Antriebsmotors und eines gegebenenfalls vorhandenen Primärretarders um den Übersetzungssprung zwischen dem zuvor eingelegten niedrigeren Gang und dem aktuell eingelegten höheren Gang abgesenkt. Dies führt, neben einer Absenkung der Lärmemissionen des Antriebsmotors und des Stufenschaltgetriebes, zu einer Reduzierung des Schleppmomentes des Antriebsmotors und des Bremsmomentes des Primärretarders. Demzufolge wird das Kraftfahrzeug beim Durchfahren des Gefälleauslaufs aufgrund der insgesamt geringeren Bremskräfte im Schubbetrieb zumindest geringfügig beschleunigt und so der durch das Fahrbahngefälle α_{FB} bedingte Schwung im Gefälleauslauf 3 und zu Beginn der Ebene 4 für den Antrieb des Kraftfahrzeugs genutzt. Der Übergang in den Zugbetrieb und damit das Einschalten der Kraftstoffeinspritzung des Antriebsmotors erfolgt daher später als bislang üblich, so dass sich besonders beim Befahren einer Straße mit bergigem Streckenprofil deutliche Kraftstoffeinsparungen ergeben.

Wenn jedoch innerhalb eines definierten, unmittelbar zurückliegenden Zeitraumes Δt die Betätigung mindestens eines sicherheitsrelevanten Fahrsteuerungselementes, wie z.B. der Betriebsbremse (x_{BP} > 0, p_{Br} > 0), detektiert und/oder ein vorab festgelegter Grenzwert mindestens eines sicherheitsrelevanten Betriebsparameters, wie z.B. eines oberen Gefällegrenzwertes α_{Gr/o} < 0 durch das ermittelte Fahrbahngefälle α_{FB/i} < 0, (|α_{FB/i}| > |α_{Gr/o}|), und/oder einer auf die maximale Bremskapazität M_{DBr_max} einer aktivierten Dauerbremse bezogene Obergrenze (z.B. 80%) durch das aktuelle Bremsmoment M_{DBr} der Dauerbremse (M_{DBr} > 0,8 * M_{DBr_max}), überschritten wurde, so wird die an sich vorgesehene Schubhochschaltung auch bei einem erkannten Gefälleauslauf 3 aus Sicherheitsgründen gesperrt, also nicht durchgeführt.

### Bezugszeichen

- 1: Kraftfahrzeug
- 2: Gefällstrecke
- 3: Gefälleauslauf
- 4: Ebene
- a_{F}: Fahrbeschleunigung
- a_{F/erw}: Erwartete Fahrbeschleunigung
- a_{Gr}: Festgelegter Beschleunigungsgrenzwert
- a_{grenz}: Beschleunigungsgrenzwert
- F_{Gr/u}: Unterer Widerstandsgrenzwert
- F_{W}: Fahrwiderstand
- M_{DBR}: Bremsmoment (einer Dauerbremse)
- M_{DBr}_ₘₐₓ: Maximale Bremskapazität (einer Dauerbremse)
- M_{DBr_erw}: Bremsqualität im erwarteten Gang
- M_{Fzg}: Fahrzeugmasse
- m_{Gr/o}: Oberer Massegrenzwert
- p_{Br}: Bremsdruck
- t: Zeit
- tᵢ: Zeitpunkt, Zeittakt
- tᵢ₊₁: Zeitpunkt, Zeittakt
- tᵢ₊₂: Zeitpunkt, Zeittakt
- tₙ: Zeitpunkt, aktueller Zeittakt
- tₙ₋₁: Zeitpunkt, letzter Zeittakt
- tₙ₋₂: Zeitpunkt, vorletzter Zeittakt
- tₙ₋₃: Zeitpunkt, drittletzter Zeittakt
- v_{F}: Fahrgeschwindigkeit (des eigenen Kfz)
- v_{F_soll}: Sollgeschwindigkeit
- v_{F/a}: Fahrgeschwindigkeit (eines vorausfahrenden Kfz)
- x_{BP}: Bremspedalauslenkung
- α_{FB}: Fahrbahnneigung
- α_{FB/i}: Wert der Fahrbahnneigung
- α_{FB/-i-1}: Wert der Fahrbahnneigung
- α_{FB/i+1}: Wert der Fahrbahnneigung
- α_{FB/i+2}: Wert der Fahrbahnneigung
- α_{FB/n}: Wert der Fahrbahnneigung
- α_{FB/n-1}: Wert der Fahrbahnneigung
- α_{FB/n-2}: Wert der Fahrbahnneigung
- α_{FB/n-3}: Wert der Fahrbahnneigung
- α_{Gr/o}: Oberer Gefällegrenzwert
- α_{Gr/u}: Unterer Gefällegrenzwert
- Δt: Zeitraum

## Patentansprüche

1. Verfahren zur Steuerung eines automatisierten Stufenschaltgetriebes, das innerhalb eines Antriebsstrangs eines Kraftfahrzeugs im Kraftfluss zwischen einem als Verbrennungsmotor ausgebildeten Antriebsmotor und einem Achsantrieb einer Antriebsachse oder einem Verteilergetriebe angeordnet ist, wobei die aktuelle Fahrbahnneigung bzw. Fahrbahnsteigung bzw. Fahrbahngefälle (α_{FB}) ermittelt wird, **dadurch gekennzeichnet, dass** spätestens nach der Einfahrt in eine Gefällstrecke (2) und/oder nach dem Übergang in einen Schubbetrieb eine Erkennungsfunktion zur Ermittlung eines Gefälleauslaufs (3) gestartet wird, und dass bei einem erkannten Gefälleauslauf (3) schon vor der Einfahrt in eine Ebene (4) und/oder vor dem Übergang in einen Zugbetrieb im Schubbetrieb in einen höheren Gang geschaltet wird, hier als Schubhochschaltung bezeichnet.

2. Verfahren nach Anspruch 1, **dadurch gekennzeichnet, dass** innerhalb der Erkennungsfunktion in einem festgelegten Zeittakt (tᵢ, tᵢ₊₁, tᵢ₊₂, ...) die Fahrbahnneigung in Fahrtrichtung (α_{FB/i}) ermittelt wird, und dass ein Gefälleauslauf dann als erkannt gilt, wenn in einer vorgegebenen Anzahl aufeinander folgender unmittelbar vorhergehender Zeittakte (tₙ₋₃, tₙ₋₂, tₙ₋₁, tₙ) das ermittelte Fahrbahngefälle (α_{FB/i}) im Betrag streng monoton fallend war, |α_{FB/i}| < |α_{FB/i-1}|, und das in dem aktuellen Zeittakt (tₙ) ermittelte aktuelle Fahrbahngefälle (α_{FB/n}) im Betrag kleiner als ein vorab festgelegter unterer Gefällegrenzwert (α_{Gr/u}) ist, |α_{FB/n}| < α_{Gr/u}|.

3. Verfahren nach Anspruch 1 oder 2, **dadurch gekennzeichnet, dass** der höhere Gang in Abhängigkeit vom aktuellen Fahrwiderstand (F_{W}) derart bestimmt wird, dass die in diesem Gang zu erwartende Fahrbeschleunigung (a_{F/erw}) einen vorab festgelegten Beschleunigungsgrenzwert (a_{Gr}) nicht überschreitet, a_{F/erw} ≤ a_{Gr}.

4. Verfahren nach zumindest einem der Ansprüche 1 bis 3, **dadurch gekennzeichnet, dass** die Schubhochschaltung bei einem erkannten Gefälleauslauf dann gesperrt wird, wenn innerhalb eines definierten unmittelbar zurückliegenden Zeitraumes (Δt) die Betätigung mindestens eines sicherheitsrelevanten Fahrsteuerungselementes detektiert und/oder ein vorab festgelegter Grenzwert mindestens eines sicherheitsrelevanten Betriebsparameters überschritten wurde.

5. Verfahren nach Anspruch 4, **dadurch gekennzeichnet, dass** die Schubhochschaltung dann gesperrt wird, wenn eine Betätigung der Betriebsbremse detektiert wurde, x_{BP} > 0, p_{Br} > 0.

6. Verfahren nach Anspruch 4 oder 5, **dadurch gekennzeichnet, dass** die Schubhochschaltung dann gesperrt wird, wenn eine positive Beschleunigung (a_{F}) des Kraftfahrzeugs detektiert wurde (a_{F} > 0) oder wenn die Beschleunigung (a_{F}) größer als ein vorgegebener Grenzwert (a_{grenz}) ist, a_{F} > a_{grenz}.

7. Verfahren nach zumindest einem der Ansprüche 4 bis 6, **dadurch gekennzeichnet, dass** die Schubhochschaltung dann gesperrt wird, wenn das ermittelte Fahrbahngefälle α_{FB} < 0, einen oberen Gefällegrenzwert, α_{Gr/o} < 0, überschritten hat, |α_{FB}| > |_{Gr/o}|.

8. Verfahren nach zumindest einem der Ansprüche 4 bis 7, **dadurch gekennzeichnet, dass** die Schubhochschaltung dann gesperrt wird, wenn die ermittelte Fahrzeugmasse (m_{Fzg}) einen oberen Massegrenzwert (m_{Gr/o}) überschritten hat, m_{Fzg} > m_{Gr/o}.

9. Verfahren nach zumindest einem der Ansprüche 4 bis 8, **dadurch gekennzeichnet, dass** die Schubhochschaltung dann gesperrt wird, wenn der ermittelte Fahrwiderstand (F_{W}) einen unteren Widerstandsgrenzwert (F_{Gr/u}) unterschritten hat, F_{W} < F_{Gr/u}.

10. Verfahren nach zumindest einem der Ansprüche 4 bis 9, **dadurch gekennzeichnet, dass** die Schubhochschaltung dann gesperrt wird, wenn bei aktivierter Dauerbremse das aktuelle Bremsmoment (M_{DBr}) der Dauerbremse eine auf die maximale Bremskapazität (M_{DBr_max}) der Dauerbremse bezogene Obergrenze, 0 > Faktor < 1, (überschritten hat, M_{DBr} > Faktor * M_{DBr_max}.

11. Verfahren nach zumindest einem der Ansprüche 4 bis 10, **dadurch gekennzeichnet, dass** die Schubhochschaltung dann gesperrt wird, wenn bei aktivierter Dauerbremse die Bremskapazität im erwarteten Gang (M_{DBr_erw}) eine auf die maximale Bremskapazität (M_{DBr_max}) der Dauerbremse bezogene Obergrenze, 0 > Faktor < 1, überschritten hat, M_{DBr_erw} > Faktor * M_{DBr_max}.

12. Verfahren nach zumindest einem der Ansprüche 4 bis 11, **dadurch gekennzeichnet, dass** die Schubhochschaltung dann gesperrt wird, wenn bei aktivierter Geschwindigkeitsregelanlage die Fahrgeschwindigkeit (v_{F}) die aktuelle Sollgeschwindigkeit (v_{F_soll}) der Geschwindigkeitsregelanlage überschritten hat, v_{F} > V_{F_soll}.

13. Verfahren nach zumindest einem der Ansprüche 4 bis 12, **dadurch gekennzeichnet, dass** die Schubhochschaltung dann gesperrt wird, wenn bei aktivierter Abstandsregelung die ermittelte Fahrgeschwindigkeit (v_{F/a}) eines vorausfahrenden Kraftfahrzeugs die eigene Fahrgeschwindigkeit (v_{F}) unterschritten hat, v_{F/a} < v_{F}.

14. Verfahren nach Anspruch 2, **dadurch gekennzeichnet, dass** die Länge der Zeittakte (tₙ₋₃, tₙ₋₂, tₙ₋₁, tₙ) variabel gestaltet wird.

## Claims

1. Method for controlling an automatic multi-stage shift transmission which is arranged within a drivetrain of a motor vehicle in the power flow between a drive engine, designed as an internal combustion engine, and an axle drive of a drive axle or a transfer box, with the present roadway inclination or roadway uphill slope or roadway downhill slope (α_{FB}) being determined, **characterized in that** a detection function for determining a downhill slope run-out (3) is started at the latest after travelling onto a downhill slope (2) and/or after the transition into an overrun mode, and **in that**, in the event of a downhill slope run-out (3) being detected, a shift is carried out into a higher gear in the overrun mode, this being referred to as an overrun upshift, already before travelling onto a level plane (4) and/or before the transition into a traction mode.

2. Method according to Claim 1, **characterized in that**, within the detection function, the roadway inclination in the direction of travel (α_{FB/i}) is determined in a defined time cycle (tᵢ, tᵢ₊₁, tᵢ₊₂,...), and **in that** a downhill slope run-out is detected if, in a predefined number of successive, directly preceding time cycles (tₙ₋₃, tₙ₋₂, tₙ₋₁, tₙ), the determined roadway downhill slope (α_{FB/i}) has strictly monotonously decreased in magnitude, |α_{FB/i}|<|_{FB/i-1}|, and the present roadway downhill slope (α_{FB/n}) determined in the present time cycle (tₙ) is smaller in magnitude than a predefined lower downhill slope limit value (α_{Gr/u}), |α_{FB/n} | < |α_{Gr/u}| .

3. Method according to Claim 1 or 2, **characterized in that** the higher gear is determined as a function of the present driving resistance (F_{W}), in such a way that the driving acceleration (a_{F/erw}) to be expected in said gear does not exceed a predefined acceleration limit value (a_{Gr}) , a_{F/erw} ≤ a_{Gr} .

4. Method according to at least one of Claims 1 to 3, **characterized in that** the overrun upshift in the event of a downward slope run-out being determined is blocked if, within a defined directly preceding time period (Δt), the actuation of at least one safety-relevant driving control element has been detected and/or a predefined limit value of at least one safety-relevant operating parameter has been exceeded.

5. Method according to Claim 4, **characterized in that** the overrun upshift is blocked if an actuation of the service brake has been detected, x_{BP} > 0, p_{Br} > 0.

6. Method according to Claim 4 or 5, **characterized in that** the overrun upshift is blocked if a positive acceleration (a_{F}) of the motor vehicle has been detected (a_{F} > 0) or if the acceleration (a_{F}) is greater than a predefined limit value (aₗᵢₘᵢₜ), a_{F} > aₗᵢₘᵢₜ.

7. Method according to at least one of Claims 4 to 6, **characterized in that** the overrun upshift is blocked if the determined roadway downhill slope, a_{FB} < 0, has exceeded an upper downhill slope limit value, α_{Gr/o} < 0, |α_{FB}|>|α_{Gr/o}|.

8. Method according to at least one of Claims 4 to 7, **characterized in that** the overrun upshift is blocked if the determined vehicle mass (m_{Fzg)} has exceeded an upper mass limit value (m_{Gr/o}), m_{Fzg} > m_{Gr/o}.

9. Method according to at least one of Claims 4 to 8, **characterized in that** the overrun upshift is blocked if the determined driving resistance (F_{W}) has fallen below a lower resistance limit value (F_{Gr/u}), F_{W} < F_{Gr/u}.

10. Method according to at least one of Claims 4 to 9, **characterized in that** the overrun upshift is blocked if, when a retarder is activated, the present braking torque (M_{DBr}) of the retarder has exceeded an upper limit in relation to the maximum braking capacity (M_{DBr_max}) of the retarder, 0 > Factor < 1, M_{DBr} > Factor * M_{DBr_max.}

11. Method according to at least one of Claims 4 to 10, **characterized in that** the overrun upshift is blocked if, when a retarder is activated, the braking Capacity in the expected gear (M_{DBr_erw}) has exceeded an upper limit in relation to the maximum braking capacity (M_{DBr_max}) of the retarder, 0 > Factor < 1, M_{DBr_erw} > Factor * M_{DBr_max}.

12. Method according to at least one of Claims 4 to 11, **characterized in that** the overrun upshift is blocked if, when a cruise control system is activated, the driving speed (v_{F}) has exceeded the present setpoint speed (v_{F_soll}) of the cruise control system, v_{F} > V_{F_soll}.

13. Method according to at least one of Claims 4 to 12, **characterized in that** the overrun upshift is blocked if, when a distance regulating system is activated, the determined driving speed (v_{F/a}) of a motor vehicle travelling in front has fallen below the vehicle's own driving speed (v_{F}), V_{F/a} < V_{F}.

14. Method according to Claim 2, **characterized in that** the length of the time cycles (tₙ₋₃, tₙ₋₂, tₙ₋₁, tₙ) is made variable.

## Revendications

1. Procédé de commande d'une transmission automatique à plusieurs rapports disposée dans le train d'entraînement d'un véhicule automobile dans la chaîne cinématique qui relie un moteur d'entraînement configuré comme moteur à combustion interne et un entraînement d'un essieu moteur ou d'une transmission de répartition, dans lequel l'inclinaison effective, l'inclinaison ou la pente de la chaussée F (α_{fb}) sont déterminées,
**caractérisé en ce que**
au plus tard après l'entrée sur une section (2) en pente et/ou le passage en mode de poussée, une fonction de détection qui détermine la sortie (3) de la pente est lancée et
**en ce que** lorsque la sortie (3) de la pente est détectée, une vitesse supérieure est engagée en mode de poussée, ce que l'on appelle ici engagement d'une vitesse supérieure en poussée, avant l'entrée sur un plan (4) et/ou le passage en mode de traction.

2. Procédé selon la revendication 1, **caractérisé en ce que** dans la fonction de détection, la pente de la chaussée dans la direction d'avancement (α_{FB/i} est déterminée à une cadence temporelle définie (tᵢ, tᵢ₋₁, tᵢ₋₂, ...) et **en ce que** la sortie d'une pente est détectée lorsqu'à un nombre prédéterminé d'instants successifs (tₙ₋₃, tₙ₋₂, tₙ₋₁, tₙ) immédiatement précédents, la valeur de la pente déterminée (α_{FB/d} de la chaussée descend de manière strictement monotone, |α_{FB/i}| < |α_{FB/i-1}|, et la valeur de la pente effective (α_{FB/n}) déterminée à l'instant en cours (tₙ) est plus petite qu'une valeur limite inférieure (α_{Gr/U}) définie préalablement, |α_{FB/n}| < |α_{Gr/u}|.

3. Procédé selon les revendications 1 ou 2, **caractérisé en ce que** la vitesse supérieure est déterminée en fonction de la résistance (F_{W}) au roulage en cours de telle sorte que lorsque cette vitesse est engagée, l'accélération de roulage attendue (α_{F/erw}) ne dépasse pas une valeur limite d'accélération (a_{Gr}) définie préalablement, |a_{F/erw} ≤ a_{Gr}|.

4. Procédé selon au moins l'une des revendications 1 à 3, **caractérisé en ce que** l'engagement d'une vitesse supérieure en poussée est bloqué lorsque la fin d'une pente est détectée si pendant une durée définie (Δt) qui vient de s'écouler, l'actionnement d'au moins un élément de commande de conduite concernant la sécurité a été détecté et/ou une valeur limite définie préalablement d'au moins un paramètre de fonctionnement concernant la sécurité a été dépassée.

5. Procédé selon la revendication 4, **caractérisé en ce que** l'engagement d'une vitesse supérieure en poussée est bloqué si l'actionnement des freins de fonctionnement a été détecté |x_{BP} > 0, p_{Br} > 0|.

6. Procédé selon les revendications 4 ou 5, **caractérisé en ce que** l'engagement d'une vitesse supérieure en poussée est bloqué si une accélération positive (a_{F}) du véhicule automobile a été détectée (a_{F} > 0) ou si l'accélération (a_{F}) est supérieure à une valeur limite prédéterminée (a_{grenz}) , |a_{F} > a_{grenz}|.

7. Procédé selon au moins l'une des revendications 4 à 6, **caractérisé en ce que** l'engagement d'une vitesse supérieure en poussée est bloqué si la pente déterminée de la chaussée |α_{FB} < 0| a dépassé une valeur limite supérieure de pente |α_{Gr/o} < 0|, ∥α_{FB}| > |α_{G}r_{/o}∥.

8. Procédé selon au moins l'une des revendications 4 à 7, **caractérisé en ce que** l'engagement d'une vitesse supérieure en poussée est bloqué si la masse déterminée du véhicule (m_{Fzg}) a dépassé une valeur limite supérieure de masse (m_{Gr/o}) |m_{Fzg} > m_{Gr/o}|.

9. Procédé selon au moins l'une des revendications 4 à 8, **caractérisé en ce que** l'engagement d'une vitesse supérieure en poussée est bloqué si la résistance déterminée au roulage (F_{W}) n'a pas atteint une limite inférieure de résistance (F_{Gr/u}), |F_{W} < F_{Gr/u}|.

10. Procédé selon au moins l'une des revendications 4 à 9, **caractérisé en ce que** l'engagement d'une vitesse supérieure en poussée est bloqué si, les freins étant actionnés de manière permanente, le couple effectif (M_{DBr}) de freinage permanent a dépassé une limite supérieure associée à la capacité maximale (M_{DBr_max}) de freinage permanent, |0 > Faktor < 1|, |M_{DBr} > Faktor * M_{DBr_max}|.

11. Procédé selon au moins l'une des revendications 4 à 10, **caractérisé en ce que** l'engagement d'une vitesse supérieure en poussée est bloqué si, le freinage permanent étant activé, la capacité de freinage dans la vitesse attendue (M_{DBR_erw}) a dépassé une limite supérieure de la capacité maximale (M_{DBr_max}) de freinage permanent, |0 > Faktor < 1|, |M_{DBr_erw} > Faktor * M_{DBr_max}|.

12. Procédé selon au moins l'une des revendications 4 à 11, **caractérisé en ce que** l'engagement d'une vitesse supérieure en poussée est bloqué si, l'installation de régulation de vitesse étant activée, la vitesse de roulage (V_{F}) a dépassé la vitesse effective de consigne V_{F_soll}) de l'installation de régulation de vitesse, |V_{F} > V_{F_soll}|.

13. Procédé selon au moins l'une des revendications 4 à 12, **caractérisé en ce que** l'engagement d'une vitesse supérieure en poussée est bloqué si, la régulation de distance étant activée, la vitesse déterminée de roulage (V_{F/a}) d'un véhicule roulant à l'avant n'a pas atteint la vitesse propre de roulage (V_{F}), |V_{F/a} < V_{F}|.

14. Procédé selon la revendication 2, **caractérisé en ce que** la longueur des instants (tₙ₋₃, tₙ₋₂, tₙ₋₁, tₙ) est variable.
